# EUROPEAN PATENT APPLICATION

(11) **EP 2 464 184 A1**
(43) Date of publication of application: **13.06.2012**
(21) Application number: 10806389.2
(22) Date of filing: 29.07.2010
(51) Int. Cl.: H04W 72/04, H04J 1/00, H04J 11/00, H04J 99/00, H04W 72/12, H04W 72/14

(54) **WIRELESS COMMUNICATION SYSTEM, MOBILE STATION DEVICE, AND BASE STATION DEVICE**

(30) Priority: 04.08.2009 JP 2009181766
(71) Applicant: Sharp Kabushiki Kaisha, Osaka-shi, Osaka 545-8522 (JP)
(72) Inventor: AKIMOTO, Yosuke, Osaka 545-8522 (JP); SUZUKI, Shoichi, Osaka 545-8522 (JP)
(74) Representative: Müller - Hoffmann & Partner
(86) International application number: PCT/JP2010/062849
(87) International publication number: WO 2011/016390

(57) **Abstract**

To provide a wireless communication system, a mobile station apparatus and a base station apparatus which reduce a resource overhead in the transmission of an aperiodic SRS, and are not accompanied with a major change from the specification of the LTE. The wireless communication system includes the base station apparatus and the mobile station apparatus transmitting a data signal to the base station apparatus by SC-FDMA (Single Carrier Frequency Division Multiple Access) system, and the mobile station apparatus transmits a reference signal for channel measurement to the base station apparatus, and the reference signal for channel measurement is transmitted using a channel for data transmission allocated for each of the mobile station apparatuses from the base station apparatus.

## Description

### Technical Field

The present invention relates to a communication technology, and more specifically, in a mobile communication system having a base station apparatus and a mobile station apparatus which perform transmission and reception, the present invention relates to a technology for efficiently transmitting a sounding reference signal compliant with MIMO and to a reception technology thereof.

### Background Art

In order to reduce an overhead of the SRS associated with the MIMO application to an LTE uplink, methods as described in Non-patent document 1 and Non-patent document 2 have been proposed. In Non-patent document 1, reducing the logical number of transmission ports by performing pre-coding on the SRS is proposed. Specifically, when the number of antennas which a mobile station apparatus has is four, multiplying this by a matrix of 3x4 makes it possible to reduce the number of antenna ports required for the SRS, namely utilization of orthogonal resources, to three. When the optimal rank and pre-coder are known in advance by a base station apparatus, this method can reduce the number of transmissions of the SRS sequence.

In Non-patent document 2, when the SRS is lacking, it is proposed that information commanding one-time SRS transmission is included in uplink resource allocation information to be transmitted to each of the mobile station apparatuses by using a downlink control channel. Here, periodic SRS transmission not less than two times (two subframes) which is performed by one setting is called periodic SRS, and the one-time SRS transmission (one subframe) which is performed by one setting is called aperiodic SRS. The method of the aperiodic SRS proposed in Non-patent document 2 allows the SRS to be transmitted by using as a trigger the timing at which the base station apparatus desires to perform MIMO communication, and can reduce an overhead due to allocating the periodic SRS resource excessively to the mobile station apparatus.

### Prior art reference

### Non-patent document

Non-patent document 1: R1-091738, "Precoded SRS for LTE-Advanced", 3GPP TSG RAN WG1 Meeting #57, San Francisco, USA, 4-8 May, 2009
Non-patent document 2: R1-091879, "SRS Transmission Issues in LTE-A", 3GPP TSG RAN WG1 Meeting #57, San Francisco, USA, 4-8 May, 2009

### Disclosure of the Invention

### Problems to be Solved by the Invention

However, Non-patent document 1 describes a method in which determining a modulation scheme and a coding rate as one application of the SRS is considered as a principal object, and by the SRS with the logical number of antenna ports reduced by performing the pre-coding, the rank and the pre-coder can not be calculated. Therefore, there was a problem that two kinds of settings where one is setting of the SRS for calculating the rank and the pre-coder, and the other is setting of the SRS for determining the modulation scheme and the coding rate were needed.

The method of Non-patent document 2 transmits the SRS once with one subframe by effectively using a vacant space of the SRS subframe, and however, the resource will be secured even in the case of not using the SRS. There is a problem that securing many SRS regions which are not used is needed in order to enable the SRS to be transmitted anytime in accordance with a situation, an overhead will become large if flexibility is made high, and as a result, the overhead reduction effect which was an object at the beginning becomes small.

The present invention is accomplished in view of such a situation, and the object is to provide a wireless communication system, a mobile station apparatus and a base station apparatus which reduce a resource overhead in the transmission of above-mentioned aperiodic SRS, and are not accompanied with a major change from the specification of the LTE.

### Means for Solving the Problem

(1) In order to achieve above-mentioned object, the present invention has taken the following measures.
That is, the wireless communication system of the present invention is a wireless communication system comprising a base station apparatus and a mobile station apparatus transmitting a data signal to the base station apparatus by SC-FDMA (Single Carrier Frequency Division Multiple Access) system, the mobile station apparatus transmitting a reference signal for channel measurement to the base station apparatus, wherein the reference signal for channel measurement is transmitted using a channel for data transmission allocated for each mobile station apparatus from the base station apparatus.

As described above, since the reference signal for channel measurement is transmitted using the channel for data transmission allocated for each mobile station apparatus from the base station apparatus, an overhead associated with resource securement for transmitting the SRS (reference signal for channel measurement) can be reduced. In addition, since, without changing widely the specification of the LTE, backward compatibility with a mobile station apparatus compliant with an existing LTE is also maintained, and radio physical structure of the LTE can be used as it is, an impact to the specification also can be reduced.

(2) In the wireless communication system of the present invention, the base station apparatus allocates a channel for data transmission to each of a plurality of mobile station apparatuses; a first mobile station apparatus transmits a reference signal for channel estimation used for data demodulation to the base station apparatus; and a second mobile station apparatus transmits the reference signal for channel measurement at the same time as the time at which the first mobile station apparatus transmits the reference signal for channel estimation, and the reference signal for channel estimation and the reference signal for channel measurement are mutually orthogonal sequences.

As described above, the second mobile station apparatus transmits the reference signal for channel measurement at the same time as the time at which the first mobile station apparatus transmits the reference signal for channel estimation, and the reference signal for channel estimation and the reference signal for channel measurement are mutually orthogonal sequences, and therefore, the overhead associated with the resource securement for transmitting the SRS can be reduced. In addition, since, without changing widely the specification of the LTE, the backward compatibility with the mobile station apparatus compliant with the existing LTE is also maintained, and the radio physical structure of the LTE can be used as it is, the impact to the specification also can be reduced.

(3) In the wireless communication system of the present invention, the reference signal for channel estimation and the reference signal for channel measurement are generated by applying different cyclic shifts to a CAZAC (Constant Amplitude and Zero-AutoCorrelation) sequence.

As described above, since the reference signal for channel estimation and the reference signal for channel measurement apply the different cyclic shifts to the CAZAC (Constant Amplitude and Zero-AutoCorrelation) sequence, the SRS can be transmitted by only an SC-FDMA symbol for transmitting DMRS.

(4) In the wireless communication system of the present invention, the base station apparatus notifies the second mobile station apparatus, using a downlink control channel, to transmit the reference signal for channel measurement at the same time as the time at which the first mobile station apparatus transmits the reference signal for channel estimation, by applying exclusive OR of a predetermined bit sequence to a CRC bit for error detection added to uplink allocation information.

As described above, since the base station apparatus applies the exclusive OR of the bit sequence determined in advance to the CRC bit for error detection added to the uplink allocation information, UL Grant transmitted to each of a mobile station apparatus A (the first mobile station apparatus) and a mobile station apparatus B (the second mobile station apparatus) can be discriminated.

(5) In the wireless communication system of the present invention, the mobile station apparatus maps an orthogonal code sequence of the reference signal for channel measurement as the reference signal for channel measurement to any of SC-FDMA symbols, and transmits to the base station apparatus the orthogonal code sequence of the reference signal for channel measurement and the SC-FDMA symbol in association with a transmission antenna.

As described above, since the orthogonal code sequence of the reference signal for channel measurement and the SC-FDMA symbol are made to be associated with each other to be transmitted to the base station apparatus, the overhead associated with the resource securement for transmitting the SRS can be reduced by a procedure in which attention is focused on only one mobile station apparatus. In addition, since, without changing widely the specification of the LTE, the backward compatibility with the mobile station apparatus compliant with the existing LTE is also maintained, and the radio physical structure of the LTE can be used as it is, the impact to the specification also can be reduced.

(6) In the wireless communication system of the present invention, the base station apparatus allocates a channel for data transmission to each of a plurality of mobile station apparatuses, while performing allocation thereof so that a combination of the SC-FDMA symbol that transmits the reference signal for channel measurement and the orthogonal code sequence of the reference signal for channel measurement is different for each mobile station apparatus.

As described above, since allocation thereof is performed so that the combination of the SC-FDMA symbol that transmits the reference signal for channel measurement and the orthogonal code sequence of the reference signal for channel measurement is different for each mobile station apparatus, the SRS of a plurality of the mobile station apparatus also can be multiplexed simultaneously.

(7) In the wireless communication system of the present invention, a data signal or CQI (Channel Quality Indicator) is mapped to the SC-FDMA symbol to which the orthogonal code sequence of the reference signal for channel measurement has not been mapped, and is transmitted to the base station apparatus.

As described above, since the data signal or the CQI (Channel Quality Indicator) is mapped to the SC-FDMA symbol to which the orthogonal code sequence of the reference signal for channel measurement has not been mapped, SC-FDMA symbols which have not been allocated to the SRS transmission can be utilized effectively.

(8) The mobile station apparatus of the present invention is a mobile station apparatus that transmits a data signal to a base station apparatus by an SC-FDMA (Single Carrier Frequency Division Multiple Access) system, wherein the mobile station apparatus transmits a reference signal for channel measurement to the base station apparatus using a channel for data transmission allocated from the base station apparatus.

As described above, the mobile station apparatus transmits the reference signal for channel measurement to the base station apparatus using the channel for data transmission allocated from the base station apparatus, and therefore, can reduce the overhead associated with the resource securement for transmitting the SRS (reference signal for channel measurement). In addition, since, without changing widely the specification of the LTE, the backward compatibility with the mobile station apparatus compliant with the existing LTE is also maintained, and the radio physical structure of the LTE can be used as it is, the impact to the specification also can be reduced.

(9) In the mobile station apparatus of the present invention, the reference signal for channel measurement is transmitted at the same time as the time at which other mobile station apparatus transmits the reference signal for channel estimation, while the reference signal for channel estimation and the reference signal for channel measurement are mutually orthogonal sequences.

As described above, the reference signal for channel measurement is transmitted at the same time as the time at which other mobile station apparatus transmits the reference signal for channel estimation, while the reference signal for channel estimation and the reference signal for channel measurement are mutually orthogonal sequences, and therefore, the mobile station apparatus can reduce the overhead associated with the resource securement for transmitting the SRS. In addition, since, without changing widely the specification of the LTE, the backward compatibility with the mobile station apparatus compliant with the existing LTE is also maintained, and the radio physical structure of the LTE can be used as it is, the impact to the specification also can be reduced.

(10) The base station apparatus of the present invention is a base station apparatus that performs radio communication with a mobile station apparatus according to claim 9, wherein the base station apparatus notifies the mobile station apparatus, using a downlink control channel, to transmit the reference signal for channel measurement at the same time as the time at which the other mobile station apparatus transmits the reference signal for channel estimation, by applying exclusive OR of a predetermined bit sequence to a CRC bit for error detection added to uplink allocation information.

As described above, since the base station apparatus applies the exclusive OR of the bit sequence determined in advance to the CRC bit for error detection added to the uplink allocation information, the mobile station apparatus can discriminate UL Grant transmitted to each of a mobile station apparatus A (the first mobile station apparatus) and a mobile station apparatus B (the second mobile station apparatus).

### Effect of the Invention

In accordance with transmission of the aperiodic SRS according to the present invention, the overhead associated with the resource securement for transmitting the SRS can be reduced. In addition, since, without changing widely the specification of the LTE, the backward compatibility with the mobile station apparatus compliant with the existing LTE is also maintained, and the radio physical structure of the LTE can be used as it is, the impact to the specification also can be reduced.

### Brief Description of the Drawings

FIG. 1 is a functional block diagram illustrating a configuration example of a base station apparatus according to an embodiment of the present invention;
FIG. 2 is a functional block diagram illustrating a configuration example of a mobile station apparatus according to an embodiment of the present invention;
FIG. 3 is a sequence chart assuming that setting of the SRS is performed from a base station apparatus according to a first embodiment of the present invention to a mobile station apparatus A and a mobile station apparatus B, and aperiodic SRS is transmitted;
FIG. 4 is a figure illustrating specifically a method of transmission of the SRS according to a first embodiment of the present invention;
FIG. 5 is a sequence chart illustrating processing and signal flow between a base station apparatus and a mobile station apparatus according to a second embodiment of the present invention;
FIG. 6 is a figure illustrating specifically a method of transmission of the SRS according to a second embodiment of the present invention;
FIG. 7 is a sequence chart illustrating a processing and signal flow between a base station apparatus and a mobile station apparatus according to a third embodiment of the present invention;
FIG. 8A is a figure illustrating specifically a method of transmission of the SRS according to the third embodiment of the present invention (simultaneous transmission with CQI);
FIG. 8B is a figure illustrating specifically a method of transmission of the SRS according to the third embodiment of the present invention (simultaneous transmission with data);
FIG. 9 is a figure illustrating specifically a method of transmission of the SRS in LTE;
FIG. 10 is a figure illustrating a detailed configuration of a sounding subframe in the LTE; and
FIG. 11 is a figure illustrating a transmission method of the SRS in the LTE.

### Best Modes for Performing the Invention

As a system of a next-generation cellular mobile communication, in 3GPP (Third Generation Partnership Project) that is an international standardization project, investigation has been performed on the specification of a network into which W-CDMA (Wideband-Code Division Multiple Access) and GSM (Global System for Mobile Communications) have been evolved.

In the 3GPP, hitherto, the cellular mobile communication system has been investigated, and the W-CDMA system has been standardized as a third generation cellular mobile communication system. HSDPA (High-Speed Downlink Packet Access) with a transmission speed further improved also has been standardized, and the service has been provided. Currently, in the 3GPP, investigation is performed also on evolution of a third generation radio access technology (Long Term Evolution: hereinafter, referred to as "LTE"), and LTE Advanced aiming at further improvement of the transmission speed (hereinafter, referred to as "LTE-A").

In transmission of uplink data in the LTE, a communication system on the basis of SC-FDMA (Single Carrier Frequency Division Multiple Access) based on resources allocated from a base station apparatus is adopted. Specifically, a modulated transmission signal is converted into a frequency domain signal by a DFT (Discrete Fourier Transformation), and after being mapped to a frequency resource allocated by the base station apparatus, converted into a time domain signal by an IDFT (Inverse DFT) to be transmitted to the base station apparatus. Here, the uplink data is given from an upper layer, and corresponds to the data in which meaning of each bit is not construed in a physical layer, and is made to be called UL-SCH (Uplink Shared Channel) defined in a transport channel. The data to be transmitted actually is one for which processing such as encoding is performed on the UL-SCH, and is transmitted by a data transmission channel called PUSCH (Physical Uplink Shared Channel) allocated by the base station apparatus.

Although in the uplink of the LTE, antenna switching which selects adaptively one transmission antenna from two transmission antennas is only supported, application of space-multiplexing based on MIMO (Multiple Input Multiple Output) is investigated in the LTE-A as extension of the uplink system, and the data of the UL-SCH is space-multiplexed and a plurality of sequences thereof are transmitted. Here, a coding rate and modulation scheme which are applied to the UL-SCH are calculated based on a sounding reference signal (SRS: Sounding Reference Signal, a reference signal for channel measurement) transmitted from the mobile station apparatus to the base station apparatus. The SRS, besides this use, is used for a use of frequency scheduling.

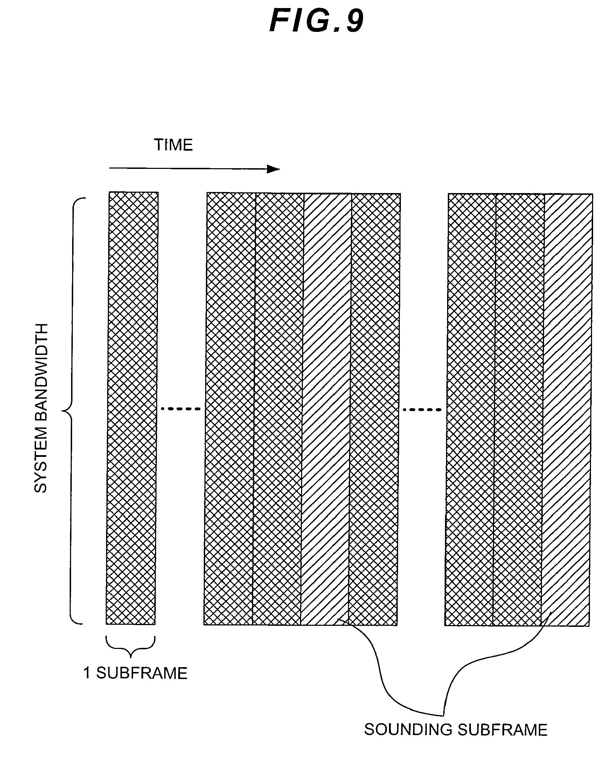

FIG. 9 is a figure illustrating specifically a method of transmission of the SRS in the LTE. The base station apparatus sets up a sounding subframe for all of the mobile station apparatuses performing communication therewith, and specifically, the sounding subframe is given an offset and period from a reference subframe. The sounding subframe is common to all of the mobile station apparatuses, which means that the SRS is transmitted in this subframe.

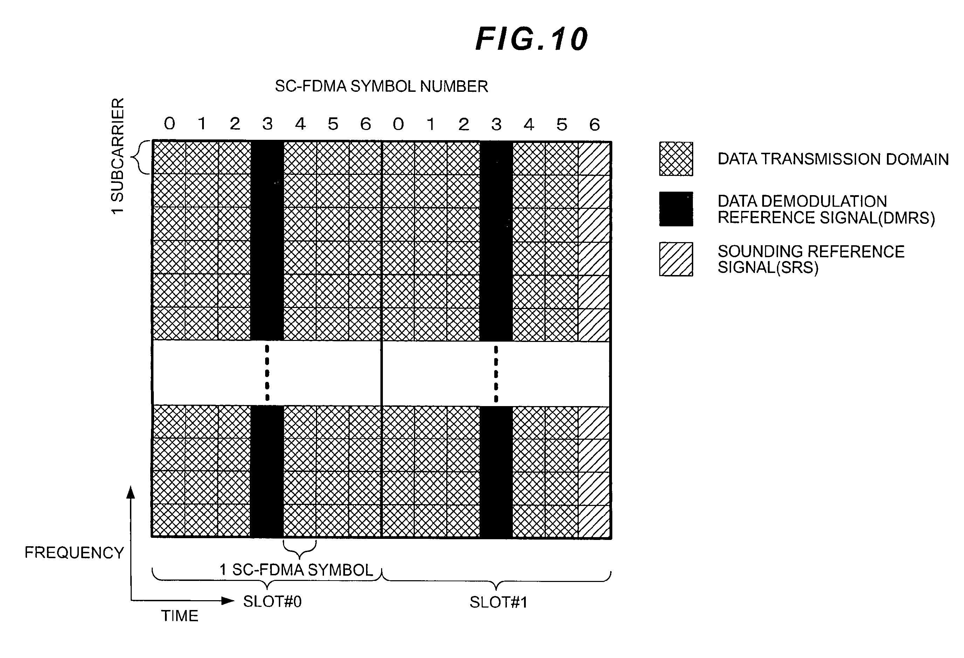

FIG. 10 is a figure illustrating a detailed configuration of the sounding subframe in the LTE. Where, in FIG. 10, only a band which can be used for allocation of the PUSCH is described, and a channel in which control information is transmitted is omitted. A vertical axis in FIG. 10 is a frequency axis, and one block indicates a subcarrier. In the LTE, contiguous twelve subcarriers are collectively used as a resource allocation unit, which is called a resource block (RB: Resource Block). On the other hand, a horizontal axis is a time-axis, and time is divided by the unit in which a frequency domain is converted into a time domain, and to which a cyclic prefix is given. This is called one SC-FDMA symbol.

In the LTE, seven contiguous SC-FDMA symbols constitute one slot, and two slots collectively constitute one subframe. The subframe has become a resource allocation unit in a time domain in the LTE and LTE-A. As illustrated in FIG. 10, each SC-FDMA symbol can be used for a different use, and the SC-FDMA symbol No. 3 is used for transmission of a data demodulation reference signal (DMRS: Demodulation Reference Signal (a reference signal for channel estimation used for data demodulation)). The SC-FDMA symbol No. 6 in the slot No. 1 is used for transmission of the SRS. The other SC-FDMA symbols are used for data transmission. Here, as for the DMRS and SRS, an orthogonal code is used for multiplexing with other users and for antenna discrimination, and in the LTE, a sequence with a CAZAC (Constant Amplitude and Zero-AutoCorrelation) sequence cyclic-shifted on the time axis is used.

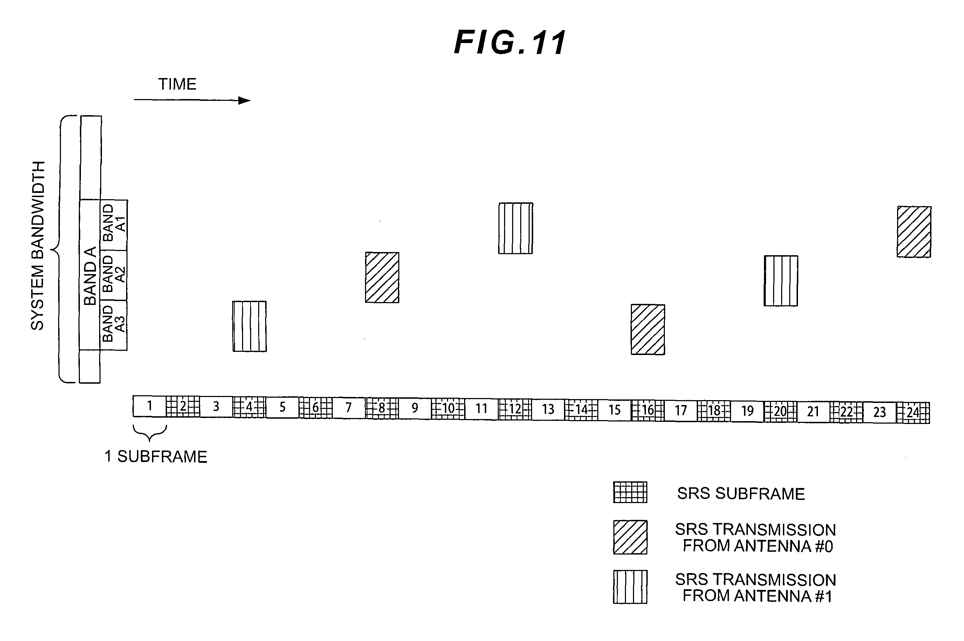

FIG. 11 is a figure illustrating a transmission method of the SRS in the LTE. The base station apparatus performs setting with respect to transmission of the SRS for each mobile station apparatus. Here, the setting indicates setting up a position of the subframe which the mobile station apparatus can use within the SRS subframes by an offset and a period, while indicating a band which the SRS supports, an SRS bandwidth transmitted in one subframe, and from which antenna transmission is performed.

Describing specifically using FIG. 11, even number subframes are set up as the SRS subframe here, and among them, {4, 8, 12, 16, 20, 24} subframes are allocated to this mobile station apparatus. The band which the SRS of this mobile station apparatus supports is A which is a part of a system bandwidth, and one third of the band A, i.e., the band A1, A2 or A3 is transmitted by one SRS transmission in a predetermined order. It is assumed that this mobile station apparatus is provided with two transmission antennas, and the SRS corresponding to one antenna is transmitted by one subframe. Specifically in this example, antennas #0 and #1 are set up so that transmission may be performed at each transmission timing by turns.

Although the SRS is transmitted by the above procedure in the LTE, in order to support MIMO space-multiplexing, in the LTE-A, a change of a transmission method of the SRS in accordance therewith is needed. Specifically, although the number of pieces of channel information corresponding to a transmission antenna which the base station apparatus should have known is two in the LTE, since the space-multiplexing by using a maximum of four transmission antennas is supported in the LTE-A, an overhead which is needed for the SRS in the LTE-A can become twice the LTE simply. Furthermore, in LTE-A, calculating the number of space-multiplexing (rank) according to a channel state using the SRS, and performing an uplink communication according to that are preferable. Furthermore, while performing pre-processing of a transmission signal in advance to be transmitted is effective in order to enhance quality of an uplink communication, calculation of the optimal pre-processing sequence (pre-coder) is also needed to be performed using the SRS. That is, in the LTE-A, in comparison with the LTE, the highly frequent and highly accurate SRS transmission must be realized. Hereinafter, embodiments of the present invention will be described with reference to drawings.

### First Embodiment

A mobile communication system according to a first embodiment of the present invention has a base station apparatus and a mobile station apparatus.

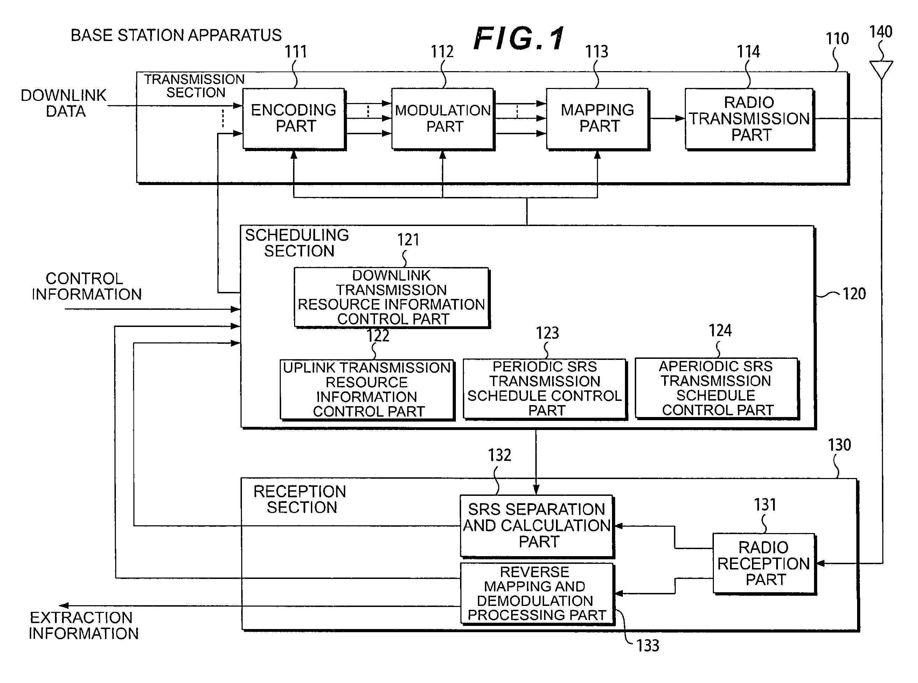

FIG. 1 is a functional block diagram illustrating a configuration example of the base station apparatus according to an embodiment of the present invention; The base station apparatus according to the present embodiment includes a transmission section 110, a scheduling section 120, a reception section 130, and an antenna 140. The transmission section 110 has an encoding part 111, a modulation part 112, a mapping part 113, and a radio transmission part 114. The scheduling section 120 is provided with a downlink transmission resource information control part 121, an uplink transmission resource information control part 122, a periodic SRS transmission schedule control part 123, and an aperiodic SRS transmission schedule control part 124, and a reception section 130 is provided with a radio reception part 131, a SRS separation and calculation part 132, and a reverse mapping and demodulation processing part 133. The antenna 140 is provided with only the number required for transmitting a downlink signal and for receiving an uplink signal.

Downlink data generated in the base station apparatus which is to be transmitted to each of mobile station apparatuses, and scheduling information for control information transmission which is outputted from the scheduling section 120, are inputted into the encoding part 111, and each of them is encoded according to a control signal from the scheduling section 120, and an encoded bit sequence is outputted. The control signal from the scheduling section 120 is one that indicates information indicating a coding rate, or an encoding method such as a turbo code, a tail biting convolutional code, for example. A plurality of information items may be encoded in combination, and each of information items may be encoded individually. Here, the information provided from the scheduling section 120 is characterized by including control information with respect to transmission of the aperiodic SRS, and indicates uplink resource allocation information (UL Grant) in which for example, allocation information of the PUSCH, sequence of the aperiodic SRS, information of a SC-FDMA symbol to be transmitted or the like are included.

A plurality of outputted bit sequences of the encoding part 111 are inputted into the modulation part 112, and are each converted into a symbol of modulation: BPSK, QPSK, 16QAM, or 64QAM for example, according to the control signal from the scheduling section 120, and are outputted. An output of the modulation part 112 is inputted into the mapping part 113 together with information of a down link scheduling provided from the scheduling section 120, and transmission data are generated. Here, the transmission data is referring to an OFDM signal, for example, and the mapping operation corresponds to an operation made to be associated with frequency and time resources specified for each mobile station apparatus. If space-multiplexing based on the MIMO is adopted, the processing thereof will be performed in this block. Here, the control information means resource allocation information to an uplink or a downlink, i.e., information on transmission timing and a frequency resource, a modulation scheme and a coding rate of an uplink or a downlink signal, and a transmission request for CQI, PMI, and RI to a mobile station apparatus, or the like.

A signal generated by the mapping part 113 is outputted to the radio transmission part 114. In the radio transmission part 114, the signal is converted into a form suitable for a transmission method, and if a communication system is based on an OFDMA specifically, a time domain signal is generated by IFFT (Inverse Fast Fourier Transformation) being performed to a frequency domain signal. An output signal of the radio transmission part 114 is supplied to the antenna 140, and is transmitted to each of mobile station apparatuses from here.

The scheduling section 120 administers and controls control information from an upper layer and information transmitted from a mobile station apparatus, and performs resource assignment to each of mobile station apparatuses, determination of a modulation scheme and a coding rate, and control of these operations and the output of the control information thereof or the like. The present invention is **characterized in that** the scheduling section 120 administers a transmission timing (time resource), a resource block (frequency resource), and a code resource of the aperiodic SRS.

The dwnlink transmission resource information control part 121 carries out scheduling and administration of a downlink resource which each of mobile station apparatuses uses, while performing generation of a control signal thereof. The uplink transmission resource information control part 122 administers an uplink resource which each of mobile station apparatuses uses, while generating a control signal thereof. The periodic SRS transmission schedule control part 123 administers a transmission resource (a time resource, a frequency resource, a code resource) of the periodic SRS applied to each of mobile station apparatuses, while performing also setting and administration with respect to a SRS subframe.
The aperiodic SRS transmission schedule control part 124 administers a transmission resource (a time resource, a frequency resource, a code resource) of the aperiodic SRS applied to each of mobile station apparatuses, while performing also generation and administration of the UL Grant for notification thereof.

On the other hand, a signal transmitted from a mobile station apparatus is inputted into the radio reception part 131 after received by the antenna 140. The radio reception part 131 accepts data and a control signal, and generates and outputs a digital signal according to a transmission method. If an OFDM method and a SC-FDMA method are specifically adopted, after analog-to-digital conversion of the reception signal, a signal to which FFT processing is performed in a unit of processing-time will be outputted. Here, in the radio reception part 131, the signal is divided into two types of signals such as a signal for measuring a state of a channel of an uplink and a signal including information to be administered as a data signal or control information to be processed in an upper layer, for example, which are each outputted as a first signal and a second signal.

The first output of the radio reception part 131 is outputted to the SRS separation and calculation part 132. Here, the aperiodic SRS or the periodic SRS included in the uplink signal is extracted, and channel information of each of mobile station apparatuses acquired therefrom is outputted to the scheduling section 120. Specifically, the SRS has the possibility of being multiplexed for each user or multiplexed with other information depending on a time, frequency and code resource, and separation of them is performed in accordance with resource allocation information administered by the periodic SRS transmission schedule control part 123 or the aperiodic SRS transmission schedule control part 124.

The second output of the radio reception part 131 is outputted to the reverse mapping and demodulation processing part 133. In the reverse mapping and demodulation processing part 133, two or more types of information transmitted from the mobile station apparatus are each demodulated and extracted using a mapping pattern, a modulation scheme and coding rate which the scheduling section 120 administers. Here, if the space-multiplexing is applied to the uplink signal, and two or more types of information having different communication quality is transmitted simultaneously, a time and frequency position in which each of the signal is included is separated in advance, and in accordance with the control information inputted from the scheduling section 120, reverse mapping and demodulation processing to which a different modulation scheme, a coding rate and the number of space-multiplexing are each applied are performed. Within signals acquired by processing like this, what is to be processed in an upper layer is outputted to the upper layer, and the control information administered by the scheduling section 120, such as CQI or RI, for example, is outputted to the scheduling section 120.

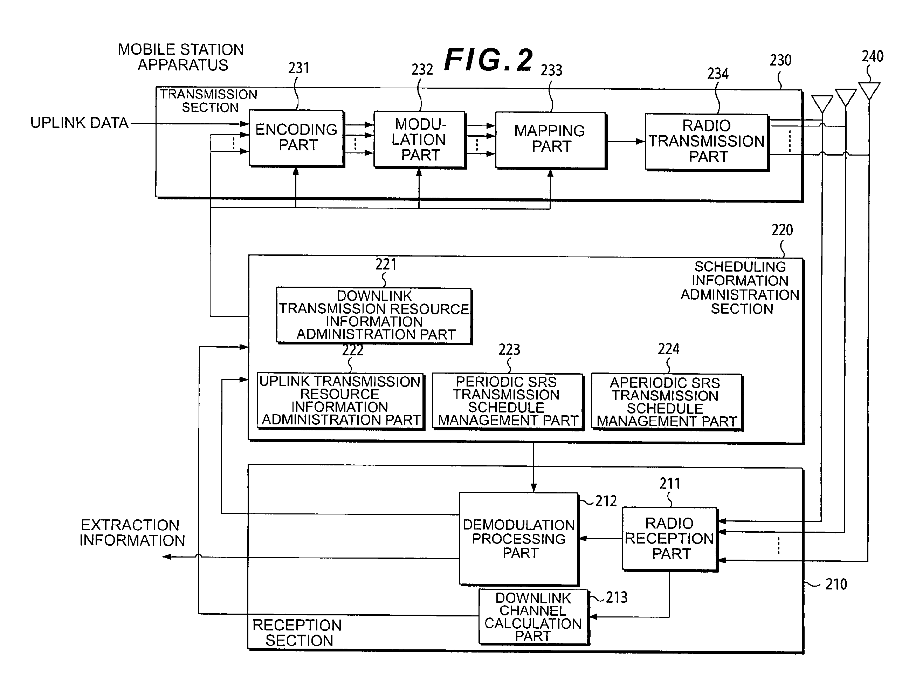

FIG. 2 is a functional block diagram illustrating a configuration example of a mobile station apparatus according to an embodiment of the present invention. Each of mobile station apparatuses is provided with a reception section 210, a scheduling information administration section 220, a transmission section 230, and an antenna 240 as illustrated in FIG. 2. The reception section 210 is provided with a radio reception part 211, a demodulation processing part 212, and a downlink channel calculation part 213. The scheduling information administration section 220 is provided with a downlink transmission resource information administration part 221, an uplink transmission resource information administration part 222, a periodic SRS transmission schedule management part 223, and an aperiodic SRS transmission schedule management part 224. The antenna 240 is provided with only the number required for transmitting an uplink signal and for receiving a downlink signal. The transmission section 230 is provided of an encoding part 231, a modulation part 232, a mapping part 233 and a radio transmission part 234.

When the antenna 240 receives a downlink signal transmitted from the base station apparatus, this reception signal will be inputted into the radio reception part 211. In the radio reception part 211, besides analog-to-digital (A/D) conversion or the like, a processing according to a communication system is performed, and outputted. In the case of OFDMA specifically, a time-series signal after A/D conversion is FFT-processed, and is converted into a time and frequency domain signal, and is outputted.

An output signal of the radio reception part 211 is inputted into the demodulation processing part 212. Meanwhile, the control information such as the scheduling information of a downlink signal outputted from the scheduling information administration section 220 (that is, information with respect to where a signal addressed to its own station is allocated), the number of sequences of the space-multiplexing, a modulation scheme and coding rate, is also inputted to the demodulation processing part 212, and demodulation processing is performed. A signal demodulated is classified according to a type of the signal, and information to be processed in an upper layer is given to the upper layer, and information to be administered in the scheduling information administration section 220 is inputted into the scheduling information administration section 220. Here, the present invention is **characterized in that** the information to be administered in the scheduling information administration section 220 includes one which relates to a resource (time, frequency, code resource) transmitting the aperiodic SRS. The downlink channel calculation part 213 calculates, with a channel calculating signal provided from the radio reception part 211 as an input signal, administrative information such as the number of sequences of the space-multiplexing applicable to a downlink, a modulation scheme, and a coding rate. This administrative information is inputted into the scheduling information administration section 220.

The scheduling information administration section 220 also administrates the control information transmitted from the base station apparatus, and performs administration for transmitting the control information calculated in the mobile station apparatus to the base station apparatus. The downlink transmission resource information administration part 221 administers downlink resource information of its own station transmitted from the base station apparatus, while performing transmission control of a downlink signal. The uplink transmission resource information administration part 222 administers uplink resource information of its own station transmitted from the base station apparatus, while performing transmission control of an uplink signal. In addition, the periodic SRS transmission schedule management part 223, administers transmission resources (a time resource, a frequency resource, a code resource) of the periodic SRS transmitted from the base station apparatus, while controlling the SRS transmission using those resources, and in addition, performing administration with respect to a SRS subframe. The aperiodic SRS transmission schedule management part 224 administers transmission resources (a time resource, a frequency resource, a code resource) of the aperiodic SRS transmitted from the base station apparatus, while controlling also generation of the aperiodic SRS using the resources thereof.

The transmission section 230 performs transmission in uplink resources to which information such as uplink data, the aperiodic SRS, or the like is allocated. The downlink data and a signal administered by the scheduling information administration section 220 are supplied to the encoding part 231 at the transmission timing thereof, and the signal inputted will be encoded at a coding rate which is different depending on each type thereof. An output signal of the plurality of sequences is inputted into the modulation part 232, and is modulated by a modulation scheme which is different depending on each type thereof. This output is outputted to the mapping part 233, and mapping of a signal is performed in accordance with the number of space-multiplexing for each transmission information and mapping position information. Specifically, in the case where SC-FDMA is applied to a transmission method, a signal is mapped to an allocated frequency domain.

The signal mapped by the mapping part 233 is inputted into the radio transmission part 234. In the radio transmission part 234, the signal is converted into a signal form to be transmitted. Specifically, an operation or the like which converts a frequency domain signal into a time domain signal by the IFFT and gives a guard interval corresponds to this. An output of the radio transmission part 234 is supplied to the antenna 240.

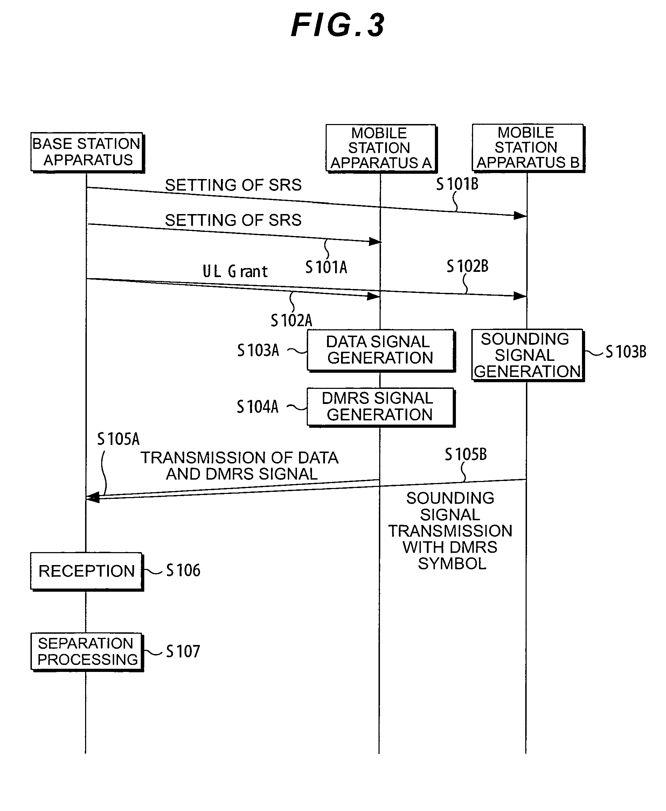

FIG. 3 is a sequence chart assuming that setting of the SRS is performed from a base station apparatus according to a first embodiment of the present invention to a mobile station apparatus A and a mobile station apparatus B, and the aperiodic SRS is transmitted. Although details are here omitted about a procedure in which the periodic SRS is transmitted, coexisting with the aperiodic SRS is also possible, and it is possible to apply the same procedure as the present embodiment irrespective of timing of the transmission time.

The base station apparatus notifies the mobile station apparatus A and the mobile station apparatus B of a setting with respect to the SRS (Step S101A, Step S101B). Here, a notification of a SRS subframe and a notification of information with respect to allocation information of the periodic SRS are performed. Here, it is not necessary to complete a processing corresponding to Step S101A and Step S101B by one subframe, and it may be performed using several subframes. A mobile station apparatus notified of a setting with respect to the SRS will transmit by using a resource with the aperiodic SRS allocated in accordance with the setting. Here, the resource is indicative of a time, frequency and code resource. Where, since the aperiodic SRS and periodic SRS do not have influence mutually, timing at which the periodic SRS is transmitted will not be mentioned clearly here.

Next, the base station apparatus transmits the uplink allocation signal (UL Grant) to the mobile station apparatus A, and the mobile station apparatus B (Step S102A, Step S102B). Here, the UL Grant transmitted to the mobile station apparatus A is one which does not instruct to transmit the SRS, but instructs to transmit a data signal and the DMRS, and has descriptions such as a position of an allocated resource block, a modulation scheme, a coding rate, an orthogonal code sequence (cyclic shift applied to CAZAC sequence) of the DMRS. Receiving this, the mobile station apparatus A generates a data signal in accordance with the UL Grant (Step S103A), and also generates a DMRS signal (Step S104A). Then, in the allocated time and frequency resource, the mobile station apparatus A transmits the data signal and DMRS to the base station apparatus (Step S105A).

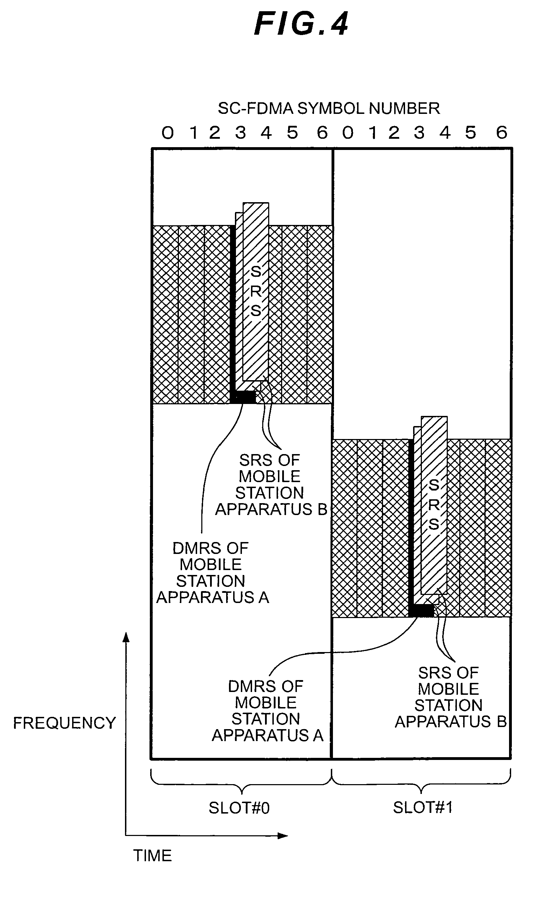

FIG. 4 is a figure illustrating specifically a method of transmission of the SRS according to a first embodiment of the present invention. Here, as illustrated in FIG. 4, the DMRS shall be mapped to the third SC-FDMA symbol.

On the other hand, in the UL Grant transmitted to the mobile station apparatus B, information specifying transmitting the aperiodic SRS is specified (Step S102B). Subsequently, the mobile station apparatus B generates a sounding signal (Step S103B). Here, difference from the UL Grant transmitted to the mobile station apparatus A is the point that data transmission is not performed in the mobile station apparatus B, and signal transmission is performed only in a SC-FDMA symbol on which the DMRS is mapped.

As a method to discriminate these UL Grant, including an discrimination bit in the UL Grant, and applying exclusive OR of a specific sequence to a bit sequence of CRC (Cyclic Redundancy Check) for error detection used for detection of the UL Grant, or the like are included. As a configuration of the specific UL Grant, a position of the allocated resource block and the orthogonal code sequence (the cyclic shift applied to a CAZAC sequence) of the aperiodic SRS are specified. This orthogonal code sequence may be notified of by a portion corresponding to the number of antennas transmitted here, or may be determined by a specification in advance so that one cyclic shift and the number of antennas are notified of, and that the cyclic shift is determined uniquely. Here, as for the orthogonal code sequence of the aperiodic SRS, a sequence which is orthogonal to the DMRS of the mobile station apparatus A shall have been selected. Specifically, used is the sequence with the CAZAC sequence used for the DMRS of the mobile station apparatus A cyclic-shifted.

The mobile station apparatus B having received the UL Grant, as illustrated in FIG. 4, transmits the SRS by using only the third SC-FDMA symbol in each slot, that is the SC-FDMA symbol in which the mobile station apparatus A transmits the DMRS (Step S105B). In the case where the two or more orthogonal sequences are allocated, it is also possible to code-multiplex the SRS corresponding to the two or more transmission antennas in this SC-FDMA symbol and carry out transmission thereof. The SRS may be transmitted from antennas different in a slot #0 and a slot #1. Information indicative of changing frequency for each slot (frequency-hopping) may be included in this UL Grant. Thereby, one-time SRS transmission instruction allows a frequency band of a wider range to be supported.

The base station apparatus having received a signal transmitted from the mobile station apparatus A and mobile station apparatus B (Step S106) performs despreading processing on the third SC-FDMA symbol with the DMRS and aperiodic SRS transmitted therein (Step S107). Thereby, the base station apparatus can know the channel corresponding to each antenna of the mobile station apparatus B. By the above procedure, transmission of new SRS compliant with a physical structure of an existing system will become possible.

### Second Embodiment

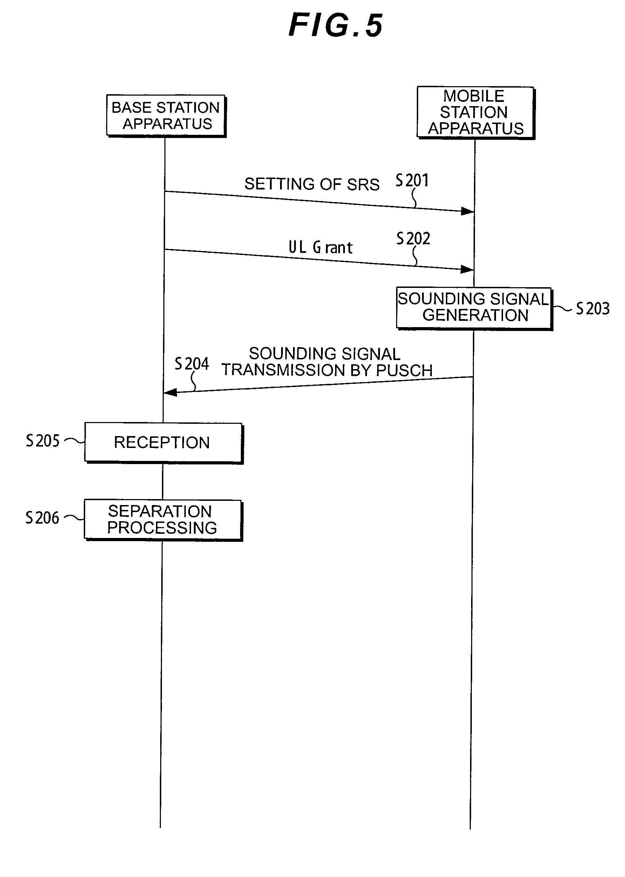

FIG. 5 is a sequence chart illustrating processing and signal flow between a base station apparatus and a mobile station apparatus according to a second embodiment of the present invention. As for configurations of the base station apparatus and the mobile station apparatus, ones which are the same configurations as illustrated in FIG. 1 and FIG. 2 can be used. Here, the different point from the first embodiment is that transmitted is the aperiodic SRS using data transmission domains (that are the 0th, first, second, forth, fifth, and sixth SC-FDMA symbol in FIG. 4) of the PUSCH. Besides, in the present embodiment, a procedure in which attention is focused on only one mobile station apparatus is described, and however, it is also possible to extend the same procedure to a plurality of mobile station apparatuses by applying TDMA, FDMA, and CDMA.

The base station apparatus notifies the mobile station apparatus of a setting with respect to the SRS (Step S201) . Here, a notification of the SRS subframe and a notification of information with respect to allocation information of the periodic SRS are performed. Here, it is not necessary to complete a processing corresponding to Step S201 by one subframe, and it may be performed using several subframes. The mobile station apparatus which is notified of the setting with respect to the SRS will transmit by using a resource with the aperiodic SRS allocated in accordance with the setting. Here, the resource is indicative of a time, frequency and code resource. Where, since the aperiodic SRS and periodic SRS do not have influence mutually, timing at which the periodic SRS is transmitted will not be mentioned clearly here.

Next, the base station apparatus transmits an uplink allocation signal (UL Grant) to the mobile station apparatus (Step S202). In the UL Grant received here, information specifying transmitting the aperiodic SRS is specified. Here, a difference from the UL Grant for the aperiodic SRS transmission illustrated in the first embodiment is that included is the information which indicates a relation among the SC-FDMA symbol in which the aperiodic SRS is transmitted, the orthogonal code sequence, and a transmission antenna corresponding thereto. As a configuration of the specific UL Grant, specified are a position of the allocated resource block, position information of the available SC-FDMA symbol, and the orthogonal code sequence of the aperiodic SRS (cyclic shift).
The position information of the available SC-FDMA symbol is configured by 7 bits, and the SRS may be made to be transmitted sequentially from the antenna 1 in the order of allocated SC-FDMA positions.

While what kind of sequence may be used for a sequence of the SRS, a CAZAC sequence or the like that is an orthogonal sequence in which the amplitude becomes constant in the frequency domain can be used. Applying the cyclic shift to this allows a plurality of the mobile station apparatus also to be multiplexed simultaneously. In accordance with the above-mentioned processing, the mobile station apparatus generates a SRS signal (Step S203), and transmits the aperiodic SRS to the base station apparatus using the allocated time (subframe, slot, SC-FDMA symbol), frequency and code (Step S204).

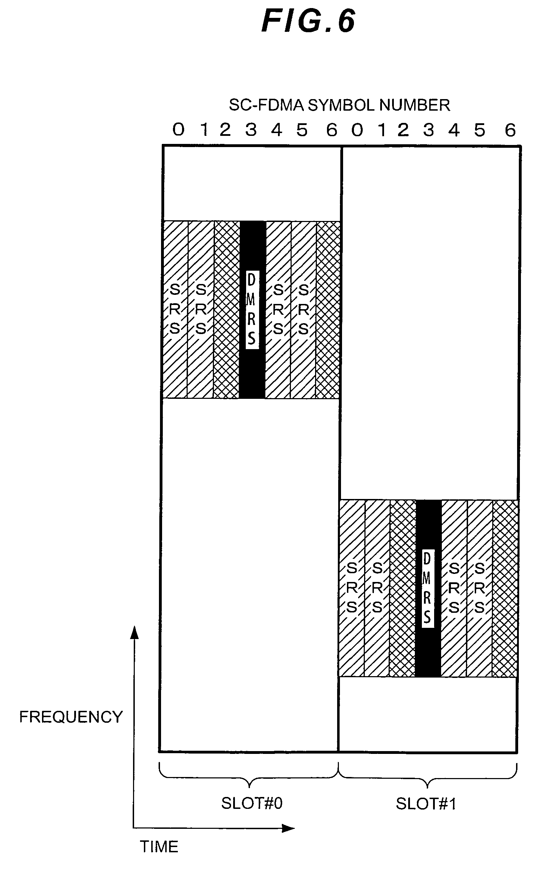

FIG. 6 is a figure illustrating specifically a method of transmission of the SRS according to a second embodiment of the present invention. Here, as indicated in FIG. 6, the SRS shall be mapped to the 0th, first, fourth, and fifth SC-FDMA symbols other than the third SC-FDMA symbol, for example.

The base station apparatus having received a signal transmitted from the mobile station apparatus (Step S205) performs despreading processing on the SC-FDMA symbol with the aperiodic SRS transmitted (Step S206). Thereby, the base station apparatus can know the channel corresponding to each antenna of the mobile station apparatus. By the above procedure, transmission of new SRS compliant with the physical structure of the existing system will become possible.

### Third Embodiment

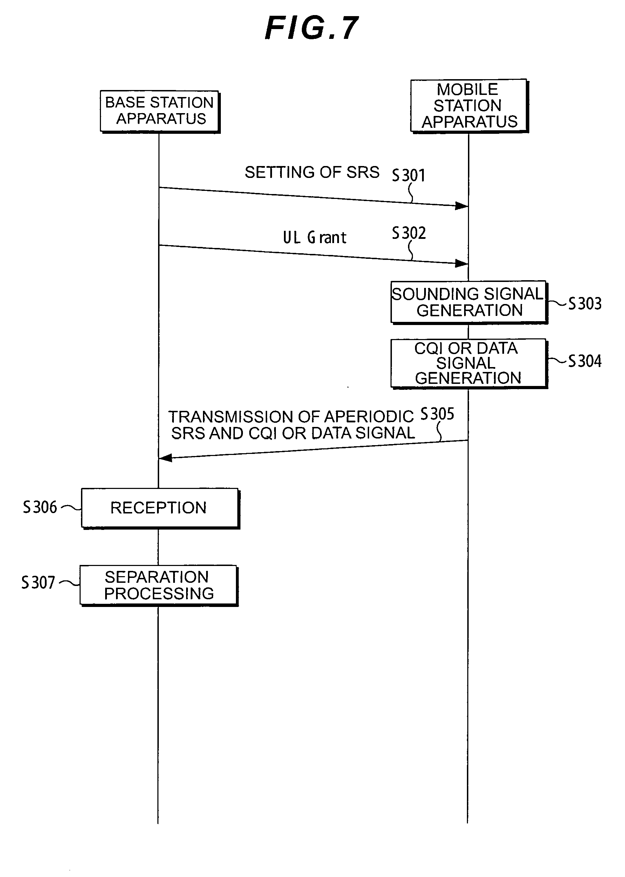

FIG. 7 is a sequence chart illustrating processing and signal flow between a base station apparatus and a mobile station apparatus according to a third embodiment of the present invention. As for configurations of the base station apparatus and the mobile station apparatus, ones which are the same configurations as illustrated in FIG. 1 and FIG. 2 can be used. Here, the different point from the first and second embodiment is that transmitted is the aperiodic SRS using data transmission domains (that are the 0th, first, second, forth, fifth, and sixth SC-FDMA symbol in FIG. 4) of the PUSCH, and at the same time, transmitted are signals other than the SRS, such as a data signal in SC-FDMA symbols which are not used.

The base station apparatus notifies the mobile station apparatus of a setting with respect to the SRS (Step S301) . Here, a notification of the SRS subframe and a notification of information with respect to allocation information of the periodic SRS are performed. Here, it is not necessary to complete a processing corresponding to Step S301 by one subframe, and it may be performed using several subframes. The mobile station apparatus notified of the setting with respect to the SRS will transmit by using a resource with the aperiodic SRS allocated in accordance with the setting. Here, the resource is indicative of a time, frequency and code resource. Where, since the aperiodic SRS and periodic SRS do not have influence mutually, timing at which the periodic SRS is transmitted will not be mentioned clearly here.

Next, the base station apparatus transmits the uplink allocation signal (UL Grant) to the mobile station apparatus (Step S302). In the UL Grant received here, information specifying transmitting simultaneously the aperiodic SRS and the other information is specified. For example, a case where the aperiodic SRS and CQI (Channel Quality Information) is transmitted simultaneously is included. In this case, in the UL Grant, information notifying to transmit the aperiodic SRS and CQI simultaneously is included.

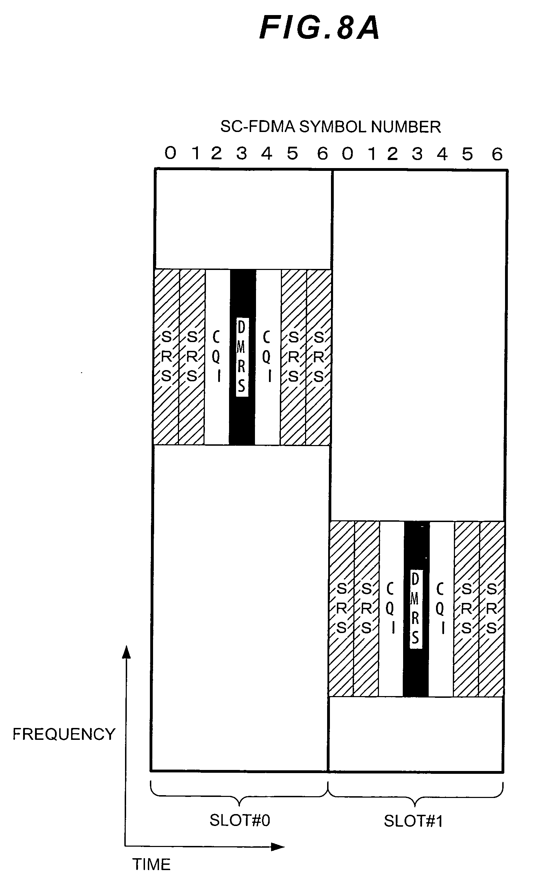

FIG. 8A is a figure illustrating specifically a method of transmission of the SRS according to a third embodiment of the present invention (simultaneous transmission with CQI). The mobile station apparatus allocates the CQI and the aperiodic SRS as illustrated in FIG. 8A. That is, in the 0th, first, fifth, and sixth SC-FDMA symbol of the slot #0 and the #1, the aperiodic SRS is allocated, and the DMRS for data signal demodulation is transmitted in the third SC-FDMA symbol of each slot, and, in the other SC-FDMA symbols, a data signal is transmitted. Furthermore, as another example, a case where the aperiodic SRS and data are transmitted simultaneously is included.

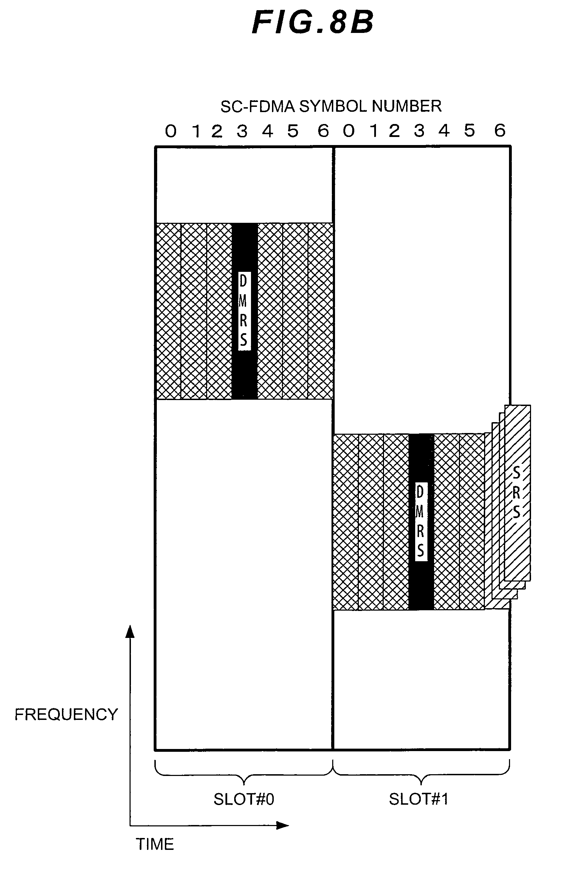

FIG. 8B is a figure illustrating specifically a method of transmission of the SRS according to a third embodiment of the present invention (simultaneous transmission with data). In this case, as a method of notifying of transmitting with the aperiodic SRS included in the UL Grant, included are providing 1 bit which indicates existence of the aperiodic SRS, and applying exclusive OR of a specific sequence to a bit sequence of CRC (Cyclic Redundancy Check) for error detection used for detection of the UL Grant or the like. Subsequently, the mobile station apparatus generates a sounding signal (Step S303). Next, the mobile station apparatus generates CQI or a data signal which is transmitted simultaneously with the aperiodic SRS (Step S304).

The mobile station apparatus allocates the data signal and the aperiodic SRS as illustrated in FIG. 8B. That is, the aperiodic SRS corresponding to the number of antennas is code-multiplexed in the sixth SC-FDMA symbol of the slot #1, and the DMRS for the data signal demodulation is transmitted in the third SC-FDMA symbol of each slot, and, in the other SC-FDMA symbols, a data signal is transmitted (Step S305).

The base station apparatus having received a signal transmitted from the mobile station apparatus (Step S306) performs despreading processing on the SC-FDMA symbol with the aperiodic SRS transmitted therein (Step S307). Thereby, the base station apparatus can know the channel corresponding to each antenna of the mobile station apparatus. By the above procedure, transmission of new SRS compliant with the physical structure of the existing system will become possible.

In each embodiment described above, by that a program for realizing each function in the base station apparatus and each function in the mobile station apparatus is made to be recorded on a computer-readable recording medium, and the program recorded on this recording medium is made to be read into a computer system, and be executed, then control of the base station apparatus or the mobile station apparatus may be performed. Besides, the term "computer system" here shall include an OS and hardware such as a peripheral device.

In addition, the "computer-readable recording medium" means a portable medium such as a flexible disk, a magnetic-optical disk, a ROM, and a CD-ROM, and a storage device such as a hard disk built in a computer system.
Furthermore, the "computer-readable recording medium" shall also include one which holds the program dynamically during short time, such as a communication line where a program is transmitted via a network such as the Internet, or a communication line such as a telephone line, and one which holds the program for a certain period of time such as a volatile memory inside a computer system which will be, in that case, a server or a client. In addition, the above-mentioned program may be one for realizing a part of the above-mentioned function, and further, may be one which can realize the above-mentioned function in combination with a program already recorded on the computer system.

As mentioned above, while embodiments of this invention have been explained in full detail with reference to drawings, the specific configurations are not limited to these embodiments, and design etc. within a scope not departing from the purport of this invention are included in the scope of Claims.

### Description of Symbols

- 110: Transmission section
- 120: Scheduling section
- 121: Downlink transmission resource information control part
- 122: Uplink transmission resource information control part
- 123: Periodic SRS transmission schedule control part
- 124: Aperiodic SRS transmission schedule control part
- 130: Reception section
- 210: Reception section
- 220: Scheduling information administration section
- 221: Downlink transmission resource information administration part
- 222: Uplink transmission resource information administration part
- 223: Periodic SRS transmission schedule management part
- 224: Aperiodic SRS transmission schedule management part
- 230: Transmission section

## Claims

1. A wireless communication system comprising a base station apparatus and a mobile station apparatus transmitting a data signal to said base station apparatus by SC-FDMA (Single Carrier Frequency Division Multiple Access) system, said mobile station apparatus transmitting a reference signal for channel measurement to said base station apparatus, wherein
said reference signal for channel measurement is transmitted using a channel for data transmission allocated for each said mobile station apparatus from said base station apparatus.

2. The wireless communication system according to claim 1, wherein:
said base station apparatus allocates a channel for data transmission to each of a plurality of mobile station apparatuses;
a first mobile station apparatus transmits a reference signal for channel estimation used for data demodulation to said base station apparatus; and
a second mobile station apparatus transmits said reference signal for channel measurement at the same time as the time at which said first mobile station apparatus transmits said reference signal for channel estimation, and said reference signal for channel estimation and said reference signal for channel measurement are mutually orthogonal sequences.

3. The wireless communication system according to claim 2, wherein said reference signal for channel estimation and said reference signal for channel measurement are generated by applying different cyclic shifts to a CAZAC (Constant Amplitude and Zero-AutoCorrelation) sequence.

4. The wireless communication system according to claim 2, wherein said base station apparatus notifies said second mobile station apparatus, using a downlink control channel, to transmit said reference signal for channel measurement at the same time as the time at which said first mobile station apparatus transmits said reference signal for channel estimation, by applying exclusive OR of a predetermined bit sequence to a CRC bit for error detection added to uplink allocation information.

5. The wireless communication system according to claim 1, wherein said mobile station apparatus maps an orthogonal code sequence of said reference signal for channel measurement as said reference signal for channel measurement to any of SC-FDMA symbols, and transmits to said base station apparatus said orthogonal code sequence of said reference signal for channel measurement and said SC-FDMA symbol in association with a transmission antenna.

6. The wireless communication system according to claim 5, wherein said base station apparatus allocates a channel for data transmission to each of a plurality of mobile station apparatuses, while performing allocation thereof so that a combination of the SC-FDMA symbol that transmits said reference signal for channel measurement and the orthogonal code sequence of said reference signal for channel measurement is different for each said mobile station apparatus.

7. The wireless communication system according to claim 5, wherein a data signal or CQI (Channel Quality Indicator) is mapped to the SC-FDMA symbol to which said orthogonal code sequence of said reference signal for channel measurement has not been mapped, and is transmitted to said base station apparatus.

8. A mobile station apparatus that transmits a data signal to a base station apparatus by an SC-FDMA (Single Carrier Frequency Division Multiple Access) system, wherein the mobile station apparatus transmits a reference signal for channel measurement to said base station apparatus using a channel for data transmission allocated from said base station apparatus.

9. The mobile station apparatus according to claim 8, wherein said reference signal for channel measurement is transmitted at the same time as the time at which other mobile station apparatus transmits said reference signal for channel estimation, while said reference signal for channel estimation and said reference signal for channel measurement are mutually orthogonal sequences.

10. A base station apparatus that performs radio communication with a mobile station apparatus according to claim 9, wherein said base station apparatus notifies said mobile station apparatus, using a downlink control channel, to transmit said reference signal for channel measurement at the same time as the time at which said other mobile station apparatus transmits said reference signal for channel estimation, by applying exclusive OR of a predetermined bit sequence to a CRC bit for error detection added to uplink allocation information.
